(19) **Europäisches Patentamt / European Patent Office / Office européen des brevets**

(11) **EP 3 704 886 B1**

(12) # EUROPEAN PATENT SPECIFICATION

(45) Date of publication and mention
of the grant of the patent:
**16.04.2025 Bulletin 2025/16**

(21) Application number: **17930539.6**

(22) Date of filing: **30.10.2017**

(51) International Patent Classification (IPC):
**H04L 1/08** (2006.01)      **H04L 1/00** (2006.01)

(52) Cooperative Patent Classification (CPC):
**H04L 1/08; H04L 1/0003; H04L 1/0009;
H04L 1/0015; H04L 1/0026**

(86) International application number:
**PCT/CN2017/108297**

(87) International publication number:
**WO 2019/084711 (09.05.2019 Gazette 2019/19)**

(54) **REPETITION TRANSMISSION BASED ON DOWNLINK CHANNEL QUALITY**

WIEDERHOLUNGSÜBERTRAGUNG BASIEREND AUF DER QUALITÄT DES DOWNLINK-KANALS

TRANSMISSION PAR RÉPÉTITION BASÉE SUR LA QUALITÉ DU CANAL DE LIAISON DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.09.2020 Bulletin 2020/37**

(73) Proprietor: **Nokia Solutions and Networks Oy
02610 Espoo (FI)**

(72) Inventors:
• **YIN, Weiwei
Shanghai 201206 (CN)**
• **CAI, Yigang
Naperville, IL 60564 (US)**

(74) Representative: **Louis Pöhlau Lohrentz
Patentanwälte
Postfach 30 55
90014 Nürnberg (DE)**

(56) References cited:
EP-A1- 3 139 529          WO-A1-2016/175576
CN-A- 1 941 668           CN-A- 103 581 959
US-A1- 2009 274 204       US-A1- 2017 265 229
US-A1- 2018 091 280

• LG ELECTRONICS: "PDSCH transmission for MTC coverage enhancement", vol. RAN WG1, no. Prague, Czech Republic; 20140210 - 20140214, 9 February 2014 (2014-02-09), XP050735859, Retrieved from the Internet <URL:http://www.3gpp.org/ftp/Meetings_3GPP_SYNC/RAN/RAN1/Docs/> [retrieved on 20140209]
• QUALCOMM INCORPORATED: "RI-1712801:Uplink HARQ-ACK feedback", 3GPP TSG RAN WGI MEETING #90, 25 August 2017 (2017-08-25), XP051315613
• MEDIATEK INC: "RI-140241:Discussion on CSI report in coverage enhancement", 3GPP TSG-RAN WGI #76, 14 February 2014 (2014-02-14), XP050751890

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 704 886 B1

## Description

### FIELD

Embodiments of the present disclosure generally relate to the field of communications, and in particular, to methods, network devices and computer-readable medium for repetition transmission.

### BACKGROUND

In the Third Generation Partnership Project (3GPP) Long Term Evolution (LTE) Release 13, a LTE Machine Type Communication (LTE-M) standard has been proposed to support the Machine Type Communication (MTC) or Internet of Things (IoT) applications. LTE-M provides low-cost LTE-M terminal devices suitable for massive MTC and IoT applications with an enhanced coverage compared to the normal LTE terminal devices. In the LTE-M communication networks, a MTC User Equipment (UE) should be controlled with different radio resource allocation algorithms and search spaces. Therefore, the physical control or data channels and downlink scheduler may be re-designed to meet the new requirements in 3GPP LTE-M communication networks.

In order to improve the coverage in LTE-M communication networks, a repetition transmission has been widely used. Generally speaking, there is a relationship between the number of repetition transmission and the repetition gain. For example, if the number of repetition transmission for a signal is doubled in the transmitting side, a 3 dB repetition gain can be achieved in the receiving side by combining the received multiple copies of the signal from the transmitting side. However, the increment of the number of repetition transmission will reduce the spectrum efficiency and the capacity of the LTE-M communication networks, which may be undesirable for some capacity-limited application scenarios. US2017/265229 A1 discloses systems which receive, via a physical random access channel, an attach request from a user device; retrieve profile data for the user device; and determine, based on RF conditions estimated from the attach request, an initial downlink repetition level for extended coverage. The systems also receive a reference signal from the user device via a physical uplink shared channel; determine an uplink repetition level for coverage extension based on the uplink RF conditions and requirements from the profile data. The systems detect high resource use within a cell; identify a shared downlink resource channel for the user device, wherein machine-type communication (MTC) data for the user device uses BPSK modulation; identify non-MTC data requiring downlink transmission to a device within the cell; and send the non-MTC data over the shared downlink resource channel, and on a resource pre-allocated for the user device, using a different modulation level.

### SUMMARY

In general, example embodiments of the present disclosure provide methods and apparatuses for updating a repetition level for a downlink channel from a network device to a terminal device in a communication network.

In a first aspect, there is provided a method implemented by a network device. According to the method, a first channel quality of a downlink channel between the network device and a terminal device is determined, based on uplink transmission from the terminal device to the network device. A second channel quality of the downlink channel is determined based on a set of parameters associated with a target performance of the downlink channel. A repetition level for the downlink channel is updated based on the first channel quality and the second channel quality. The repetition level indicates the number of repetition transmissions in the downlink channel. Wherein the downlink channel is a downlink data channel, and wherein determining the second channel quality of the downlink channel comprises: determining a Modulation and Coding Scheme, MCS, based on the first channel quality; and determining the second channel quality based on the set of parameters associated with the target performance of the downlink channel under the determined MCS.

In a second aspect, there is provided a network device. The network device comprises a processor and a memory coupled to the processor. The memory stores instructions that when executed by the processor, cause the network device to performs actions. The actions comprise: determining a first channel quality of a downlink channel between the network device and a terminal device, based on uplink transmission from the terminal device to the network device; determining a second channel quality of the downlink channel based on a set of parameters associated with a target performance of the downlink channel; and updating a repetition level for the downlink channel based on the first channel quality and the second channel quality. The repetition level indicates the number of repetition transmissions in the downlink channel. Wherein the downlink channel is a downlink data channel, and wherein determining the second channel quality of the downlink channel comprises: determining a Modulation and Coding Scheme, MCS, based on the first channel quality; and determining a second channel quality based on the set of parameters associated with the target performance of the downlink channel under the determined MCS.

In a third aspect, there is provided a computer readable medium having instructions stored thereon. The instructions, when executed on at least one processor, cause the at least one processor to carry out the method according to the first aspect.

Other features of the present disclosure will become easily comprehensible through the following description.

## BRIEF DESCRIPTION OF THE DRAWINGS

Through the more detailed description of some embodiments of the present disclosure in the accompanying drawings, the above and other objects, features and advantages of the present disclosure will become more apparent, wherein:

Fig. 1 shows a schematic diagram of a communication environment in which embodiments of the present disclosure can be implemented;
Fig. 2 shows a diagram illustrating a process of repetition transmission in a downlink channel in accordance with some embodiments of the present disclosure;
Fig. 3 shows a flowchart of a method for updating a repetition level of a downlink channel in accordance with some embodiments of the present disclosure;
Fig. 4 shows a block diagram of an apparatus in accordance with some embodiments of the present disclosure; and
Fig. 5 shows a simplified block diagram of a network device that is suitable for implementing some embodiments of the present disclosure.

Throughout the drawings, the same or similar reference numerals represent the same or similar element.

## DETAILED DESCRIPTION

Principle of the present disclosure will now be described with reference to some example embodiments. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "network device" or "Base Station" (BS) refers to a device which is capable of providing or hosting a cell or coverage where terminal devices can communicate. Examples of a network device include, but not limited to, a Node B (NodeB or NB), an Evolved NodeB (eNodeB or eNB), a next generation NodeB (gNB), a Transmission Reception Point (TRP), a Remote Radio Unit (RRU), a radio head (RH), a Remote Radio Head (RRH), a low power node such as a femto node, a pico node, and the like. For the purpose of discussion, in the following, some embodiments will be described with reference to TRP as examples of the network device.

As used herein, the term "terminal device" refers to any device having wireless or wired communication capabilities. Examples of the terminal device include, but not limited to, UE, personal computers, desktops, mobile phones, cellular phones, smart phones, Personal Digital Assistants (PDAs), portable computers, image capture devices such as digital cameras, gaming devices, music storage and playback appliances, or Internet appliances enabling wireless or wired Internet access and browsing and the like. For the purpose of discussion, in the following, some embodiments will be described with reference to UE as examples of the terminal device.

As used herein, the singular forms "a", "an" and "the" are intended to include the plural forms as well, unless the context clearly indicates otherwise. The term "includes" and its variants are to be read as open terms that mean "includes, but is not limited to." The term "based on" is to be read as "at least in part based on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below.

Communication discussed in the present disclosure may conform to any suitable standards including, but not limited to, New Radio Access (NR), LTE, LTE-Evolution, LTE-Advanced (LTE-A), Wideband Code Division Multiple Access (WCDMA), Code Division Multiple Access (CDMA) and Global System for Mobile Communications (GSM) and the like. Furthermore, the communications may be performed according to any generation communication protocols either currently known or to be developed in the future. Examples of the communication protocols include, but not limited to, the First Generation (1G), the Second Generation (2G), 2.5G, 2.75G, the Third Generation (3G), the Fourth Generation (4G), 4.5G, the Fifth Generation (5G) communication protocols.

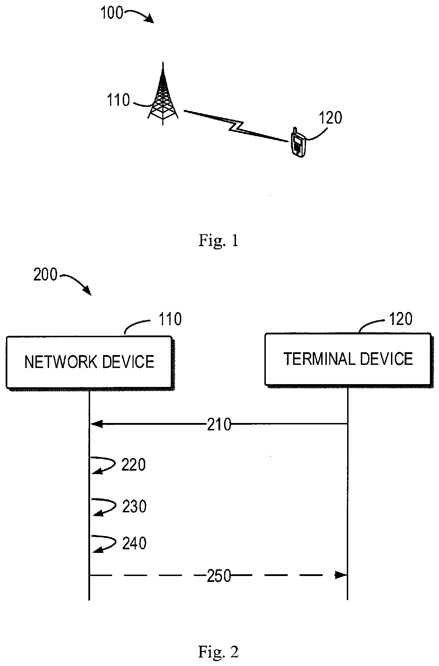

Fig. 1 shows a schematic diagram of a communication environment in which embodiments of the present disclosure can be implemented. The network 100 includes a network device 110 and a terminal devices 120 served by the network device 110. The serving area of the network device 110 is referred to as a cell. It is to be understood that the number of network devices and terminal devices is only for the purpose of illustration without introducing any limitations. The network 100 may include any suitable number of network devices and terminal devices adapted for implementing the present disclosure. Although not shown, it would be appreciated that more terminal devices may be located in the cell and served by network device 110.

In order to improve the coverage of the network 100, the network device 110 may perform a repetition transmission in the downlink channel from the network device 110 to the terminal device 120. The repetition transmission refers to a plurality of retransmissions for the same signal in the downlink channel. The terminal device 120 may perform a combining operation for the plurality of copies of the same signal from the repetition transmission, in order to improve the receiving signal quality. The combining operation may be a Maximum Ration Combining (MRC), a Selective Combining (SC) or an Equal Gain Combing (EGC).

Although the coverage of the network can be improved through a repetition transmission in the downlink channel, the spectrum efficiency and the network capacity may be linearly decreased due to a repetition transmission. For example, if the number of repetition transmission is doubled, the spectrum efficiency of the downlink channel will be reduced by half, which will be undesirable especially for the throughout-sensitive applications. Moreover, if the predetermined number of the repetition transmission is large; the processing delay for the repetition transmission in the terminal device will be undesirable, which is unacceptable for the delay sensitive application scenarios, such as real-time control and monitoring applications or some emergency calling applications.

Example embodiments of the present disclosure provide a solution for updating the repetition level of the repetition transmission in the downlink channel. According to the embodiments described herein, the repetition level indicates the number of repetition transmissions in the downlink channel from the network device 110 and the terminal device 120. The repetition level of the downlink channel may be dynamically updated according to the channel quality of the downlink channel and the target channel quality associated with a target performance of the downlink channel. For example, if the downlink channel is in good channel condition, the repetition level of the downlink transmission may be reduced in order to decrease the number of retransmission and thereby improve the spectrum efficiency of the communication network. Therefore, the network device may determine the repetition level according to different conditions of the channel quality, thereby achieving a better overall performance for the communication network.

Fig. 2 shows a diagram illustrating a process of repetition transmission in a downlink channel in accordance with some embodiments of the present disclosure. The method 200 may be carried out by the network device 110, for example.

The terminal device 120 performs 210 an uplink transmission from the terminal device 120 to the network device 110. For example, in some embodiments, the terminal device 120 may transmit the Channel Quality indicator (CQI), which indicates the channel quality of the downlink channel. As another example, the terminal device 120 may also transmit Acknowledgement /Negative Acknowledgement (ACK/NACK) feedbacks for the received downlink data, indicating the performance of the downlink channel. In still another example, the terminal device 120 may perform a Discontinuous Transmission (DTX) in the uplink channel, which means the terminal device 120 may not successfully decode the downlink control information in for example, such as the Downlink Control Information (DCI) in the downlink channel from the network device 110 to the terminal device 120.

Upon receipt of the information of the uplink transmissions from the terminal device 120, the network device 110 determines 220 the channel quality of the downlink channel based on the uplink transmissions. The channel quality may be determined from, for example, CQI, information of the ACK/NACK feedbacks, detection of DTX in the uplink channels from the terminal device 120, and the like.

The network device 110 also determines 230 a target channel quality of the downlink channel based on one or more parameters associated with a target performance of the downlink channel. In one example, the target channel quality may be related to the link level parameter in the physical layer, such a target error rate of the downlink channel, a transmission power of the network device 110 and a transmission power of the terminal device 120. In another example, the target channel quality may be related to the network level parameters in the higher layers, such as a coverage range of the communication network 100, and a traffic model of the communication network 100. Moreover, the target channel quality may be dynamically updated by the telecommunication operators or vendors according to some predefined higher level operation rules, by taking different priority levels of the communication network 100 into account for example. It is to be understood that the target channel quality of the downlink channel may be obtained based on aforementioned link level and/or network level parameters, through the link level, system level computer simulations and/or field tests. More details on the determination of the target channel quality will be illustrated below.

The network device 110 updates 240 the repetition level according to the determined channel quality and the target channel quality. For example, the network device 110 may employ the updated repetition level to perform the downlink transmission to the terminal device 120.

In addition, in 250, if the repetition level is changed, the network device 110 may also send the updated repetition level to the terminal device 120 by downlink signaling in the downlink channel. Alternatively, the network device 110 may not send the terminal device 120 explicit information of the updated repetition level by downlink signaling; and instead, the terminal device 120 may perform a blind detection for the repetition level in order to obtain the updated repetition level by the terminal device 120 itself.

With the operations by the network device 110, compared with the traditional fixed repetition level solutions, the repetition level for the downlink transmission in the present disclosure may be dynamically changed or updated according to the channel condition of the downlink channel. Since the repetition level for the downlink channel is dynamically updated to adapt to the change of the channel conditions, by using the methods in the present disclosure, a better spectrum efficiency and network capacity may be achieved in the communication network 100, such as the MTC and IoT communication networks.

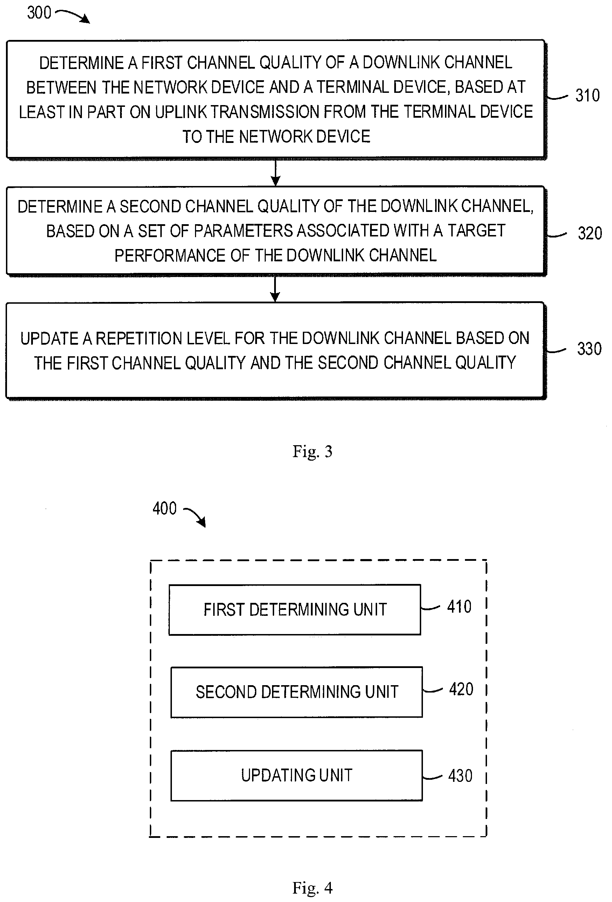

Fig. 3 shows a flowchart of a method 300 for updating a repetition level of a downlink channel in accordance with some embodiments of the present disclosure. The method 300 may be implemented at the network device 110 in the network 100 for example.

In block 310, the network device 110 determines a channel quality (referred to as "a first channel quality") of a downlink channel between the network device 110 and the terminal device 120, based at least in part on uplink transmission from the terminal device 120 to the network device 110.

In the following, examples where the downlink channel may be a downlink control channel are not according to the invention and are present for illustration purposes only. For example, the downlink channel may be a downlink control channel, such as the Physical Downlink Control Channel (PDCCH) in LTE communication networks and the MTC Physical Downlink Control Channel (MPDCCH) in LTE-M communication networks. The first channel quality for the downlink control channel may be determined according to information obtained from the uplink transmission. In one example, the network device 110 may determine the first channel quality from the CQI received in the uplink channel according to a CQI and channel quality mapping relationship. For instance, the CQI and channel quality mapping relationship may be predetermined and then organized in a lookup table. If the network device 110 obtains the CQI from the uplink channel, it may simply determine the first channel quality according to the lookup table. In another example, the network device 110 may also detect a DRX in the uplink transmission channel, which means the terminal device 120 may not successfully decode the control information in the downlink channel. Therefore, if the network device 110 detects a DRX from the uplink channels, it may have an estimation of the downlink channel, based on which the network device 20 may adjust the first channel quality by a predefined DRX offset.

In the following description, an example for the determination of the first channel quality for downlink control channel is presented only for illustration purpose. It is to be understood that the first channel quality for the downlink control channel may be represented by a Signal to Interference plus Noise Ratio (SINR) or a Signal to Noise Ratio (SNR). Without loss of any generality, in the following description, the SINR will be used to illustrate how to obtain the first channel quality based on the uplink transmissions. For example, the first channel quality of the downlink control channel may be represented by the SINR of the downlink channel, indicated by SINR_first for example. The SINR_first can be determined as below:

$$\text{SINR\_first} = 10log_{10}\text{SINR}_{CQI} + \text{DTX\_offset} \qquad (1)$$

where CQI represents a CQI received from the uplink channels in the User Control Information (UCI) in the Physical Uplink Control Channel (PUCCH) and MTC Physical Uplink Control Channel (MPUCCH), $\text{SINR}_{CQI}$ represents the determined SINR for the downlink control channel from the received CQI according to the CQI and channel quality mapping relationship, and DTX_offset represents an offset of the channel quality due to the detection of the uplink DRX.

As discussed above, the first channel quality, (e.g., the SINR in Equation (1)) may represent an estimated channel condition for the physical downlink channel as a function of different information associated with the uplink transmission, such as the CQI in the uplink channel and a detection of DRX in the uplink channel and etc. It is to be understood that the detection of the DRT may imply that the terminal device 120 cannot successfully decode the control information in the downlink channel such as the DCI. Therefore, for example, DTX_offset may be a negative offset parameter, if the network device 110 detects a DRX in the uplink channels, such as the PUCCH and Physical Uplink Shared Channel (PUSCH) in LTE systems.

In some embodiments of the disclosure, the downlink channel may be a downlink data channel, such as the Physical Downlink Shared Channel (PDSCH) in LTE communication networks and MTC Physical Downlink Shared Channel (MPDSCH) in LTE-M communication networks. In these embodiments, the first channel quality for the downlink data channel may be also determined according to information obtained from the uplink transmission.

In one example, the network device 110 may determine the first channel quality from the CQI received from the uplink channel according to the CQI and channel quality mapping relationship. For instance, the CQI and channel quality mapping relationship may be predetermined and organized in a lookup table. In this case, if the network device 110 obtains the CQI from the uplink channel, it may simply determine the first channel quality according to the lookup table.

In another example, the network device 110 may receive the ACK/NACK feedback in the PUCCH and MPUCCH from the terminal device 120, from which a statistics of the ACK and NACK may be calculated by the network device 110. For instance, the statistics of the ACK and NACK may be a percentage of the number of the NACKs in the total number of the ACK and NACK feedbacks, which may represent an estimation of the Block Error Rate (BLER) of the downlink data transmission.

As another instance, the statistics of the ACK and NACK may be a predetermined number of NACKs. If more NACKs are received in the uplink transmission from the terminal device 120, it means that the channel quality of the downlink data channel is in relatively worse channel conditions. In this case, the first channel quality of the downlink channel should be updated by adjusting with a negative offset, in order to take the statistics of the ACK and NACK feedback into account. It is to be understood that the offset for the first channel quality with respect to a statistics of ACK and NACK may be predetermined through the link level, system level simulations and/or field tests.

In another example, the first channel quality may be determined according to the value of Control Format Indicator (CFI) for the downlink control channel. The value of a CFI indicates the number of the Orthogonal Frequency Division Multiplexing (OFDM) symbols in the control region in one downlink subframe. The impact of CFI on the estimated first channel quality for the downlink data channel may be represented by another offset value.

For instance, if there are less OFDM symbols in the control region (e.g., CFI=1), it means there are more OFDM symbols used to transmit data in PDSCH in the subframe, which will lead to a better decoding performance for the downlink data channel. In this case, the first channel quality should be correspondingly adjusted by a positive offset in order to make a more reasonable estimation of the first channel quality for the downlink data channel. It is to be appreciated that the offset for the first channel quality with respect to a value of the CFI may be also predetermined by the link level, system level simulations and/or field tests.

An example embodiment for the determination of the first channel quality for downlink data channel will now be described, only for illustration purpose. It is to be understood that the first channel quality for the downlink data channel may be represented by a SINR or a SNR. Without loss of any generality, a SINR will be employed to illustrate how to obtain the first channel quality based on the uplink transmissions. The first channel quality of the downlink data channel may be represented by the SINR of the downlink channel, indicated by SINR_first for example. The SINR_first can be determined as below:

$$\mathrm{SINR\_first} = 10 log_{10} \mathrm{SINR}_{CQI} + \mathrm{NACK}_{offset} + \mathrm{CFI\_offset} \qquad (2)$$

where CQI indicates a CQI received from the uplink transmission in the UCI in the PUCCH and MPUCCH, $\mathrm{SINR}_{CQI}$ represents the derived SINR of the downlink data channel from the received CQI according to mapping relationship between the CQIs and channel qualities, $\mathrm{NACK}_{offset}$ represents the offset of first channel quality with respect to the statistics of ACK and NACK and CFI_offset represents the offset of the first channel quality with respect to a value of CFI for a downlink control channel. It is to be appreciated the mapping relationship between the CQIs and channel qualities, the offset of first channel quality with respect to the statistics of ACK and NACK and the offset of the first channel quality with respect to a value of CFI for a downlink control channel may be predetermined by the computer simulations and/or field tests.

Still in reference with Fig. 3, in block 320, the network device 110 determines a channel quality (referred to as "a second channel quality") of the downlink channel based on a set of parameters associated with a target performance of the downlink channel. The second channel quality may be also represented by SINR or SNR. The second channel quality indicates a target channel quality for a target performance of the downlink channel under different link or system conditions in the communication network 100. The target channel quality may depend on different link level parameters. Therefore, in one example, the set of parameters may include some link level parameters of the communication network 100, such as a target decoding performance of the downlink channel, a transmission power of the network device 110, and a transmission power of the terminal device 120. The target decoding performance may be indicated by a target error rate, such as a target BLER for the downlink channel for example. The second channel condition may also depend on the network level parameters. In another example, the set of parameters may also include some network level parameters of the communication network 100, such as a coverage range of the communication network 100, a channel model of the communication network 100 and a traffic model of the communication network 100. It is appreciated that the parameters are provided only for illustration. All the modification, variations and combinations of the parameters discussed above fall within the scope of the disclosure.

The relationship profile between a target performance of the downlink channel and the second channel quality under the set of link or network level parameters may be obtained by computer simulations and/or field tests. For instance, the relationship profile may be stored for further usage in a profile database at the network device 110. The relationship profile may be also updated by the network device 110 in a periodic or event-trigger manner, as these link and network level parameters of the communication network 100 may vary at time.

Moreover, the second channel quality may be predefined and/or updated by the telecommunication operators or vendors based on various operational rules. The higher level operational rules may take different types of the time window in the communication network 100 and different priority levels of the cells or sectors in the communication network 100 into consideration. In one example, the target channel quality, *i.e.,* the second channel quality may be determined lower for the time periods with a lower traffic load in the communication network 100. In another example, the target channel quality may be determined larger for the cells or sectors with higher priority levels, thereby achieving a dynamic and flexible control of the network performance.

In the following, examples where the downlink channel may be a downlink control channel are not according to the invention and are present for illustration purposes only. For example,, modulation and Coding Scheme (MCS) may be fixed for the downlink control channel. In LTE communication systems, for example, the modulation scheme for the PDCCH is Quadrature Phase Shift Keying (QPSK) and the channel coding is Turbo coding with a coding rate of 1/3. All the specific numeral values are described only for illustration purpose, without suggesting any limitations as to the scope of the present disclosure. Therefore, the second channel quality for the downlink control channel may be determined according to a predetermined decoding performance for the downlink control channel. For example, with a target error rate of 1% for the downlink control channel, the second channel quality for the downlink control channel may be predetermined by link level or system level simulations and field tests.

In the LTE or LTE-M communication network, a MCS represent a specific modulation and coding scheme used for the transmission of data channel. For example, if the first channel quality is considered better, the modulation order will be larger and the coding rate will be also higher. For example, if the first channel quality (represented by the SINR) is higher than 15dB, a high modulation order, for example a 64 Quadrature Amplitude Modulation (QAM) may be employed for downlink transmission. It is appreciated that the numerical values are described only for illustration, without suggesting any limitations as to the scope of the present disclosure. In order to determine the second signal quality for the downlink data channel, the network device 110 may determine a MCS based on the first channel quality, according to a mapping relationship between MCSs and downlink channel qualities for example. The mapping relationship between the MCSs and the downlink channel qualities may be predetermined according to different subframe structures by computer simulations and/or field tests.

In some embodiments of the disclosure, the maximum MCS for LTE or LTE-M communication network may be limited to a predefined level. In this case, the maximum MCS may be taken into consideration in the process of determining the second channel quality from the first channel quality of the downlink data channel. For example, a preliminary MCS may be first determined based on the first channel quality according to the mapping relationship between the MCSs and channel qualities. If the preliminary MCS is larger than the predefined maximum MCS, the MCS for the first channel quality may be configured as the predefined maximum MCS. On the other hand, if the preliminary MCS is smaller than the predefined maximum MCS, the MCS for the first channel quality may be configured as the preliminary MCS.

In some embodiments of the disclosure, in order to adapt the traffic model and reduce the undesirable segment of the downlink transmission, a minimum MCS for LTE or LTE-M communication network may be specified in advance. For example, the downlink data packet is 160 bits in 3GPP traffic model. In this case, the minimum MCS can be set to 1 (for a transmission block size of 208 bits).

For example, in some embodiments, a preliminary MCS may be first determined based on the first channel quality according to the mapping relationship between the MCSs and channel qualities. If the preliminary MCS is larger than the predefined minimum MCS, the MCS for the first channel quality may be configured as the preliminary MCS. On the other hand, if the preliminary MCS is smaller than the predefined maximum MCS, the MCS for the first channel quality may be configured as the predefined minimum MCS.

Alternatively, or in addition, both the maximum MCS and the minimum MCS may be predefined for the downlink data channel. The determination of the MCS from the first channel quality may take both the maximum MCS and the minimum MCS into consideration. It is to be understood that given the teachings and suggestions herein, any other ways for determining the MCS from the first channel quality of the downlink data channel can be envisaged and thus fall within the scope of the present disclosure.

In view of the determined MCS, the network device 110 may determine a second channel quality based the set of parameters associated with a target performance of the downlink data channel. More specifically, as discussed above, the second channel quality is a target channel quality for the downlink data channel with respect to a predetermined decoding performance. For a given MCS, the second channel quality may be obtained by computer simulations and/or field tests based on the set of parameters associated with the target performance of the downlink channel, such as a target decoding performance with a BLER of 1% for example. For example, the target decoding performance may be determined according to the specific applications and the priority levels of the terminal users.

In block 330, the network device 110 updates the repetition level for the downlink channel based on the first channel quality and the second channel quality. As discussed, the repetition level indicates the number of repetition transmissions in the downlink channel. The downlink channel may be a downlink control channel or a downlink data channel from the network device 110 to the terminal device 120. The first channel quality of the downlink channel may represent the channel condition of the physical downlink channel from the network device 110 to the terminal device 120. On the other hand, the second channel quality of the downlink channel may represent an overall channel condition of the downlink channel in the terminal device 120.

If the second channel quality is smaller than the first channel quality, it means the physical downlink channel condition is good enough to achieve the target channel quality in the terminal device 120. In this case, the repetition level may be reduced by a predetermined level or just kept unchanged.

If the second channel quality is larger than the first channel quality, it means the physical downlink channel condition cannot fulfill the overall channel quality requirements in the terminal device 120 indicated by the second channel quality. In this case, more repetition transmissions are required to achieve the desired second channel quality with a target performance.

That is, the repetition level should be increased to fill the gap between the first channel quality and the second channel quality through downlink repetition transmission. The repetition gain of an increased repetition level may also represent a repetition coding gain through the simple repetition transmissions.

In some embodiments of the disclosure, if the first channel quality exceeds the second channel quality, the network device 110 may maintain the repetition level unchanged. As discussed, in this case, the physical downlink channel quality is good enough compared with the target channel quality. Therefore, the repetition level may be simply kept unchanged.

In some embodiments of the disclosure, if the first channel quality exceeds the second channel quality, the network device 110 may decrease the repetition level by a predetermined level in order to improve the spectrum efficiency of the communication network 100.

Table 1 shows examples of decreasing the repetition level.

Table.1

| $r_{max}$ | $r_1$ | $r_2$ | $r_3$ | $r_4$ |
|---|---|---|---|---|
| 1 | 1 | - | - | - |
| 2 | 1 | 2 | - | - |
| 4 | 1 | 2 | 4 | - |
| >=8 | $\dfrac{r_{max}}{8}$ | $\dfrac{r_{max}}{4}$ | $\dfrac{r_{max}}{2}$ | $r_{max}$ |

In Table.1, $r_{max}$ represents a maximum repetition level, and $r_i$ $i$ = 1, 2, 3, 4 represent a plurality of different repetition levels. Without any loss of generality, it is assumed that $r_{max}$ is predefined as 4 and it is also assumed that current repetition level is $r_3$, which is equal to 4.

As discussed above, if the first channel quality exceeds the second channel quality, the network device 110 may decrease the current repetition level by a predetermined level. In this specific example, the network device 110 may decrease the repetition level from $r_3$ to $r_2$ or $r_1$. That is, in this case, the repetition level may be decreased from 4 to 2 or 1.

It is to be understood that the configuration of repetition level in Table. 1 is presented only for illustration, without introducing any limitation to the scope of the disclosure. It is also to be understood that all the numerical values in the present disclosure are described only for illustration, without suggesting any limitations as to the scope of the present disclosure. With the teachings and suggestions in the present disclosure, the skilled in the art may conceive other modifications or variations to the configurations for repetition level in the present disclosure, which shall fall within the scope of the present disclosure.

In some embodiments of the disclosure, if the first channel quality is less than the second channel quality, it means that there is a gap between the physical downlink channel quality (represented by the first channel quality) and the target downlink channel quality (represented by the second channel quality). In this situation, the network device 110 may increase the repetition level so that a repetition gain of the increased repetition level is larger than a difference between the first channel quality and the second channel quality. In this way, more repetition coding gain can be exploited through repetition downlink transmission in order to fill the gap between the second channel quality and the first channel quality. The repetition gain represents a channel quality gain of an increased repetition level with respect to the case of no repetition transmission in the downlink channel. The repetition gain for different repetition levels may be predetermined by link level, system level simulations and/or field tests.

In some embodiments of the disclosure, the network device 110 may also transmit the updated repetition level for the downlink channel in a downlink signaling to the terminal device 120. For example, the updated repetition level may be explicitly informed from the network device 110 to the terminal device 120 in the DCI in PDCCH, Medium Access Control (MAC) Control Element (CE) or the Radio Resource Control (RRC) signaling. For another example, the updated repetition level may be obtained by the terminal device 120 in an implicit way. For instance, the terminal device 120 may derive the updated repetition level by performing a blind detection itself for example.

Fig. 4 shows a block diagram of an apparatus 400 in accordance with some embodiments of the present disclosure. The apparatus 400 may be implemented at the network device 110 in the network 100.

The apparatus 400 includes a first determining unit 410, a second determining unit 420 and an updating unit 430. The first determining unit 410 may be configured to determine a first channel quality of a downlink channel between the network device 110 and a terminal device 120, based at least in part on uplink transmission from the terminal device 120 to the network device 110. The second determining unit 420 may be configured to determine a second channel quality of the downlink channel based on a set of parameters associated with a target performance of the downlink channel. The updating unit 430 may be configured to update a repetition level for the downlink channel based on the first channel quality and the second channel quality. The repetition level indicates a number of repetition transmissions in the downlink channel.

In some embodiments of the disclosure, the downlink channel is a downlink data channel, and the first determining unit 410 may be configured to determine the first channel quality based on at least one of a CQI from an uplink channel between the network device 110 and the terminal device 120, a statistics of ACK and NACK from the uplink channel, and a value of CFI for a downlink control channel.

In some embodiments of the disclosure, the second determining unit 420 may be further configured to determine the second channel quality of the downlink channel based on a predetermined error rate of the downlink channel.

In some embodiments of the disclosure, the downlink channel is a downlink data channel, and the second determining unit 420 may be configured to determine a MCS based on the first channel quality; and determine second channel quality based on the set of parameters associated with the performance of the downlink channel under the determined MCS.

In some embodiments of the disclosure, he second determining unit 420 may be configured to determine a MCS based on the first channel quality and a relationship between MCSs and channel qualities.

In some embodiments of the disclosure, the updating unit 430 may be configured to in response to the first channel quality exceeding the second channel quality, keep the repetition level unchanged or decrease the repetition level.

In some embodiments of the disclosure, the updating unit 430 may be configured to in response to the first channel quality being less than the second channel quality, increase the repetition level so that a repetition gain of the increased repetition level is larger than a difference between the first channel quality and the second channel quality.

In some embodiments of the disclosure, the apparatus 400 may include a transmitting unit, which may be configured to transmit the updated repetition level for the downlink channel to the terminal device 120.

In some embodiments of the disclosure, the first channel quality and the second channel quality are at least one of a SINR and SNR.

In some embodiments of the disclosure, the communication network is a MTC network, and the downlink channel is at least one of MPDCCH and MPDSCH.

It is also to be understood that the apparatus 400 may be respectively implemented by any suitable technique either known at present or developed in the future. Further, a single device shown may be alternatively implemented in multiple devices separately, and multiple separated devices may be implemented in a single device. The scope of the present disclosure is not limited in these regards.

Additionally, the apparatus 400 may be configured to implement functionalities as described with reference to Fig. 3. Therefore, the features discussed with respect to the method 300 may apply to the corresponding components of the apparatus 400, and the features discussed with respect to the method 300 may apply to the corresponding components of the apparatus 400. It is to be appreciated that the components of the apparatus 400 may be embodied in hardware, software, firmware, and/or any combination thereof. For example, the components of the apparatus 400 may be respectively implemented by a circuit, a processor or any other appropriate device. Those skilled in the art will appreciate that the aforesaid examples are only for illustration not limitation.

In some embodiment of the present disclosure, the apparatus 400 may comprise at least one processor. The at least one processor suitable for use with embodiments of the present disclosure may include, by way of example, both general and special purpose processors already known or developed in the future. The apparatus 400 may further comprise at least one memory. The at least one memory may include, for example, semiconductor memory devices, e.g., RAM, ROM, EPROM, EEPROM, and flash memory devices. The at least one memory may be used to store program of computer executable instructions. The program can be written in any high-level and/or low-level compliable or interpretable programming languages. In accordance with embodiments, the computer executable instructions may be configured, with the at least one processor, to cause the apparatus 400 to at least perform according to the method 300 as discussed above.

Based on the above description, the skilled in the art would appreciate that the present disclosure may be embodied in an apparatus, a method, or a computer program product. In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the embodiments of this disclosure may be illustrated and described as block diagrams, flowcharts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The various blocks shown in Fig. 4 may be viewed as method steps, and/or as operations that result from operation of computer program code, and/or as a plurality of coupled logic circuit elements constructed to carry out the associated function(s). At least some aspects of the embodiments of the disclosures may be practiced in various components such as integrated circuit chips and modules, and that the embodiments of this disclosure may be realized in an apparatus that is embodied as an integrated circuit, FPGA or ASIC that is configurable to operate in accordance with the embodiments of the present disclosure.

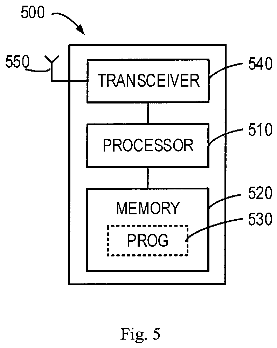

Fig. 5 is a simplified block diagram of a network device 500 that is suitable for implementing embodiments of the present disclosure. As shown, the network device 500 includes one or more processors 510, one or more memories 520 coupled to the processor(s) 510, one or more transmitters and/or receivers (TX/RX) 540 coupled to the processor 510.

The processor 510 may be of any type suitable to the local technical network, and may include one or more of general purpose computers, special purpose computers, microprocessors, Digital Signal Processors (DSPs) and processors based on multicore processor architecture, as non-limiting examples. The network device 500 may have multiple processors, such as an application specific integrated circuit chip that is slaved in time to a clock which synchronizes the main processor.

The memory 520 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples.

The memory 520 stores at least a part of a program 530. The TX/RX 540 is for bidirectional communications. The TX/RX 540 has at least one antenna to facilitate communication, though in practice the network device 500 mentioned in this disclosure may have several ones. The communication interface may represent any interface that is necessary for communication with other network elements.

The program 530 is assumed to include program instructions that, when executed by the associated processor 510, enable the network device 500 to operate in accordance with the embodiments of the present disclosure, as discussed herein with reference to Figs. 2 and 3. That is, embodiments of the present disclosure can be implemented by computer software executable by the processor 510 of the network device 500, or by hardware, or by a combination of software and hardware.

While this specification contains many specific implementation details, these should not be construed as limitations on the scope of any disclosure or of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

**Claims**

1. A method implemented by a network device (110) of a communication network, comprising:

   determining a first channel quality of a downlink channel between the network device (110) and a terminal device (120), based on uplink transmission from the terminal device (120) to the network device (110);
   determining a second channel quality of the downlink channel, based on a set of parameters associated with a target performance of the downlink channel; and
   updating a repetition level for the downlink channel based on the first channel quality and the second channel quality, the repetition level indicating a number of repetition transmissions in the downlink channel,
   wherein the downlink channel is a downlink data channel, and
   wherein determining the second channel quality of the downlink channel comprises:

      determining a Modulation and Coding Scheme, MCS, based on the first channel quality; and
      determining the second channel quality based on the set of parameters associated with the target performance of the downlink channel under the determined MCS.

2. The method according to Claim 1, wherein determining the first channel quality comprises determining the first channel quality based on at least one of:

a CQI from an uplink channel between the network device (110) and the terminal device (120),
a statistics of Acknowledgement, ACK, and Negative Acknowledgement, NACK, from the uplink channel, and
a value of Control Format Indicator, CFI, for a downlink control channel.

3. The method according to Claim 1, wherein the set of parameters associated with the target performance of the downlink channel includes at least one of:

a target error rate of the downlink channel,
a coverage range of the communication network,
a transmission power of the network device (110),
a transmission power of the terminal device (120), and
a traffic model of the communication network.

4. The method according to Claim 1, wherein determining the MCS based on the first channel quality comprises: determining the MCS based on the first channel quality and a relationship between MCSs and channel qualities.

5. The method according to Claim 1, wherein updating the repetition level comprises: in response to the first channel quality exceeding the second channel quality, keeping the repetition level unchanged or decreasing the repetition level.

6. The method according to Claim 1, wherein updating the repetition level comprises: in response to the first channel quality being less than the second channel quality, increasing the repetition level so that a repetition gain of the increased repetition level is larger than a difference between the first channel quality and the second channel quality.

7. The method according to Claim 1, further comprising: transmitting the updated repetition level for the downlink channel to the terminal device (120).

8. The method according to Claim 1, wherein the first channel quality and the second channel quality are at least one of:

a Signal to Interference plus Noise Ratio, SINR, and
a Signal to Noise Ratio, SNR.

9. The method according to Claim 1, wherein the communication network is a machine type communication, MTC, network, and the downlink channel is MTC Physical Downlink Shared Channel, MPDSCH.

10. A network device (500), comprising:

a processor (510); and
a memory (520) coupled to the processor and storing instructions thereon, the instructions, when executed by the processor, causing the communication device to perform actions, the actions comprising:

determining a first channel quality of a downlink channel between the network device (500) and a terminal device (120), based on uplink transmission from the terminal device (120) to the network device (500);
determining a second channel quality of the downlink channel based on a set of parameters associated with a target performance of the downlink channel; and
updating a repetition level for the downlink channel based on the first channel quality and the second channel quality, the repetition level indicating a number of repetition transmissions in the downlink channel, wherein the downlink channel is a downlink data channel, and
wherein determining the second channel quality of the downlink channel comprises:

determining a Modulation and Coding Scheme, MCS, based on the first channel quality; and
determining a second channel quality based on the set of parameters associated with the target performance of the downlink channel under the determined MCS.

11. The network device (500) according to Claim 10, wherein determining the first channel quality comprises determining the first channel quality based on at least one of:

a CQI from an uplink channel between the network device (500) and the terminal device (120),
a statistics of Acknowledgement, ACK, and Negative Acknowledgement, NACK, from the uplink channel, and
a value of Control Format Indicator, CFI, for a downlink control channel.

12. The network device (500) according to Claim 10, wherein the set of parameters associated with the target performance of the downlink channel includes at least one of:

a target error rate of the downlink channel,
a coverage range of the communication network,
a transmission power of the network device (500),
a transmission power of the terminal device (120), and
a traffic model of the communication network.

13. The network device (500) according to Claim 10, wherein determining the MCS based on the first channel quality comprises:
determining the MCS based on the first channel quality and a relationship between MCSs and channel qualities.

14. The network device (500) according to Claim 10, wherein updating the repetition level comprises:
in response to the first channel quality exceeding the second channel quality, keeping the repetition level unchanged or decreasing the repetition level.

15. The network device (500) according to Claim 10, wherein updating the repetition level comprises:
in response to the first channel quality being less than the second channel quality, increasing the repetition level so that a repetition gain of the increased repetition level is larger than a difference between the first channel quality and the second channel quality.

16. The network device (500) according to Claim 10, wherein the actions further comprising:
transmitting the updated repetition level for the downlink channel to the terminal device (120).

17. The network device (500) according to Claim 10, wherein the first channel quality and the second channel quality are at least one of:

a Signal to Interference plus Noise Ratio, SINR, and
a Signal to Noise Ratio, SNR.

18. The network device (500) according to Claim 10, wherein the communication network is a machine type communication, MTC, network, and the downlink channel is MTC Physical Downlink Shared Channel, MPDSCH.

19. A computer readable medium having instructions stored thereon, the instructions, when executed on at least one processor of a network device, causing the at least one processor to carry out the method according to any of Claims 1 to 9.


**Patentansprüche**

1. Verfahren, das von einer Netzwerkvorrichtung (110) eines Kommunikationsnetzwerks implementiert wird und Folgendes umfasst:

Bestimmen einer ersten Kanalqualität eines Downlinkkanals zwischen der Netzwerkvorrichtung (110) und einer Endgerätevorrichtung (120) auf Basis einer Uplinkübertragung von der Endgerätevorrichtung (120) zur Netzwerkvorrichtung (110);
Bestimmen einer zweiten Kanalqualität des Downlinkkanals auf Basis eines Satzes von Parametern, die mit einer Sollleistung des Downlinkkanals verknüpft sind; und
Aktualisieren eines Wiederholungsmaßes für den Downlinkkanal auf Basis der ersten Kanalqualität und der zweiten Kanalqualität, wobei das Wiederholungsmaß eine Anzahl von Wiederholungsübertragungen im Downlinkkanal anzeigt,
wobei der Downlinkkanal ein Downlinkdatenkanal ist, und
wobei das Bestimmen der zweiten Kanalqualität des Downlinkkanals Folgendes umfasst:

Bestimmen eines Modulations- und Codierschemas, MCS, auf Basis der ersten Kanalqualität; und Bestimmen der zweiten Kanalqualität auf Basis des Satzes von Parametern, die mit der Sollleistung des Downlinkkanals unter dem bestimmten MCS verknüpft sind.

2. Verfahren nach Anspruch 1, wobei das Bestimmen der ersten Kanalqualität das Bestimmen der ersten Kanalqualität auf Basis von mindestens einem von Folgendem umfasst:

einem CQI von einem Uplinkkanal zwischen der Netzwerkvorrichtung (110) und der Endgerätevorrichtung (120), einer Statistik einer Bestätigung, ACK, und einer Negativbestätigung, NACK, vom Uplinkkanal, und einem Wert eines Steuerformatindikators, CFI, für einen Downlinksteuerkanal.

3. Verfahren nach Anspruch 1, wobei der Satz von Parametern, die mit der Sollleistung des Downlinkkanals verknüpft sind, mindestens eines von Folgendem umfasst:

einer Sollfehlerrate des Downlinkkanals, einem Abdeckungsbereich des Kommunikationsnetzwerks, einer Übertragungsleistung der Netzwerkvorrichtung (110), einer Übertragungsleistung der Endgerätevorrichtung (120), und einem Verkehrsmodell des Kommunikationsnetzwerks.

4. Verfahren nach Anspruch **1,** wobei das Bestimmen des MCS auf Basis der ersten Kanalqualität Folgendes umfasst: Bestimmen des MCS auf Basis der ersten Kanalqualität und einer Beziehung zwischen MCSs und Kanalqualitäten.

5. Verfahren nach Anspruch **1,** wobei das Aktualisieren des Wiederholungsmaßes Folgendes umfasst: in Reaktion darauf, dass die erste Kanalqualität die zweite Kanalqualität überschreitet, Halten des Wiederholungsmaßes unverändert oder Verringern des Wiederholungsmaßes.

6. Verfahren nach Anspruch **1,** wobei das Aktualisieren des Wiederholungsmaßes Folgendes umfasst: in Reaktion darauf, dass die erste Kanalqualität kleiner ist als die zweite Kanalqualität, Erhöhen des Wiederholungsmaßes derart, dass ein Wiederholungsgewinn des erhöhten Wiederholungsmaßes größer ist als eine Differenz zwischen der ersten Kanalqualität und der zweiten Kanalqualität.

7. Verfahren nach Anspruch 1, das ferner Folgendes umfasst: Übertragen des aktualisierten Wiederholungsmaßes für den Downlinkkanal zur Endgerätevorrichtung (120).

8. Verfahren nach Anspruch 1, wobei die erste Kanalqualität und die zweite Kanalqualität mindestens eines von Folgendem sind:

einem Signal-zu-Interferenz-plus-Rauschen-Verhältnis, SINR, und einem Signal-zu-Rauschen-Verhältnis, SNR.

9. Verfahren nach Anspruch 1, wobei das Kommunikationsnetzwerk ein Maschinenkommunikations(MTC)-Netzwerk ist und der Downlinkkanal ein physischer gemeinsam verwendeter MTC-Downlinkkanal, MPDSCH, ist.

10. Netzwerkvorrichtung (500), die Folgendes umfasst:

einen Prozessor (510); und einen Speicher (520), der an den Prozessor gekoppelt ist und Anweisungen darin speichert, wobei die Anweisungen, wenn sie vom Prozessor ausgeführt werden, die Kommunikationsvorrichtung veranlassen, Aktionen durchzuführen, wobei die Aktionen Folgendes umfassen:

Bestimmen einer ersten Kanalqualität eines Downlinkkanals zwischen der Netzwerkvorrichtung (500) und einer Endgerätevorrichtung (120) auf Basis einer Uplinkübertragung von der Endgerätevorrichtung (120) zur Netzwerkvorrichtung (500); Bestimmen einer zweiten Kanalqualität des Downlinkkanals auf Basis eines Satzes von Parametern, die mit einer Sollleistung des Downlinkkanals verknüpft sind; und Aktualisieren eines Wiederholungsmaßes für den Downlinkkanal auf Basis der ersten Kanalqualität und der zweiten Kanalqualität, wobei das Wiederholungsmaß eine Anzahl von Wiederholungsübertragungen im Downlinkkanal anzeigt,
wobei der Downlinkkanal ein Downlinkdatenkanal ist, und
wobei das Bestimmen der zweiten Kanalqualität des Downlinkkanals Folgendes umfasst:

Bestimmen eines Modulations- und Codierschemas, MCS, auf Basis der ersten Kanalqualität; und
Bestimmen einer zweiten Kanalqualität auf Basis des Satzes von Parametern, die mit der Sollleistung des Downlinkkanals unter dem bestimmten MCS verknüpft sind.

**11.** Netzwerkvorrichtung (500) nach Anspruch 10,
wobei das Bestimmen der ersten Kanalqualität das Bestimmen der ersten Kanalqualität auf Basis von mindestens einem von Folgendem umfasst:

einem CQI von einem Uplinkkanal zwischen der Netzwerkvorrichtung (500) und der Endgerätevorrichtung (120),
einer Statistik einer Bestätigung, ACK, und einer Negativbestätigung, NACK, vom Uplinkkanal, und
einem Wert eines Steuerformatindikators, CFI, für einen Downlinksteuerkanal.

**12.** Netzwerkvorrichtung (500) nach Anspruch 10, wobei der Satz von Parametern, die mit der Sollleistung des Downlinkkanals verknüpft sind, mindestens eines von Folgendem umfasst:

einer Sollfehlerrate des Downlinkkanals,
einem Abdeckungsbereich des Kommunikationsnetzwerks,
einer Übertragungsleistung der Netzwerkvorrichtung (500),
einer Übertragungsleistung der Endgerätevorrichtung (120), und
einem Verkehrsmodell des Kommunikationsnetzwerks.

**13.** Netzwerkvorrichtung (500) nach Anspruch 10, wobei das Bestimmen des MCS auf Basis der ersten Kanalqualität Folgendes umfasst:
Bestimmen des MCS auf Basis der ersten Kanalqualität und einer Beziehung zwischen MCSs und Kanalqualitäten.

**14.** Netzwerkvorrichtung (500) nach Anspruch 10, wobei das Aktualisieren des Wiederholungsmaßes Folgendes umfasst:
in Reaktion darauf, dass die erste Kanalqualität die zweite Kanalqualität überschreitet, Halten des Wiederholungsmaßes unverändert oder Verringern des Wiederholungsmaßes.

**15.** Netzwerkvorrichtung (500) nach Anspruch 10, wobei das Aktualisieren des Wiederholungsmaßes Folgendes umfasst:
in Reaktion darauf, dass die erste Kanalqualität kleiner ist als die zweite Kanalqualität, Erhöhen des Wiederholungsmaßes derart, dass ein Wiederholungsgewinn des erhöhten Wiederholungsmaßes größer ist als eine Differenz zwischen der ersten Kanalqualität und der zweiten Kanalqualität.

**16.** Netzwerkvorrichtung (500) nach Anspruch 10, wobei die Aktionen ferner Folgendes umfassen:
Übertragen des aktualisierten Wiederholungsmaßes für den Downlinkkanal zur Endgerätevorrichtung (120).

**17.** Netzwerkvorrichtung (500) nach Anspruch 10, wobei die erste Kanalqualität und die zweite Kanalqualität mindestens eines von Folgendem sind:

einem Signal-zu-Interferenz-plus-Rauschen-Verhältnis, SINR, und
einem Signal-zu-Rauschen-Verhältnis, SNR.

**18.** Netzwerkvorrichtung (500) nach Anspruch 10, wobei das Kommunikationsnetzwerk ein Maschinenkommunikations(MTC)-Netzwerk ist und der Downlinkkanal ein physischer gemeinsam verwendeter MTC-Downlinkkanal, MPDSCH, ist.

**19.** Computerlesbares Medium, auf dem Anweisungen gespeichert sind, wobei die Anweisungen, wenn sie auf mindestens einem Prozessor einer Netzwerkvorrichtung ausgeführt werden, den mindestens einen Prozessor veranlassen, das Verfahren nach einem der Ansprüche 1 bis 9 umzusetzen.

**Revendications**

1. Procédé mis en œuvre par un dispositif de réseau (110) d'un réseau de communication, comprenant :

la détermination d'une première qualité de canal d'un canal de liaison descendante entre le dispositif de réseau (110) et un dispositif terminal (120), sur la base d'une transmission de liaison montante du dispositif terminal (120) au dispositif de réseau (110) ;
la détermination d'une deuxième qualité de canal du canal de liaison descendante, sur la base d'un ensemble de paramètres associés à une performance cible du canal de liaison descendante ; et
la mise à jour d'un niveau de répétition pour le canal de liaison descendante sur la base de la première qualité de canal et de la deuxième qualité de canal, le niveau de répétition indiquant un nombre de transmissions de répétition dans le canal de liaison descendante,
dans lequel le canal de liaison descendante est un canal de données de liaison descendante, et
dans lequel la détermination de la deuxième qualité de canal du canal de liaison descendante comprend :

la détermination d'un schéma de modulation et de codage, MCS, sur la base de la première qualité de canal ; et
la détermination de la deuxième qualité de canal sur la base de l'ensemble de paramètres associés à la performance cible du canal de liaison descendante sous le MCS déterminé.

2. Procédé selon la revendication 1, dans lequel la détermination de la première qualité de canal comprend la détermination de la première qualité de canal sur la base d'au moins l'un des éléments suivants :

un CQI provenant d'un canal de liaison montante entre le dispositif de réseau (110) et le dispositif terminal (120),
des statistiques d'accusé de réception, ACK, et d'accusé de réception négatif, NACK, du canal de liaison montante, et
une valeur d'indicateur de format de contrôle, CFI, pour un canal de contrôle de liaison descendante.

3. Procédé selon la revendication 1, dans lequel l'ensemble de paramètres associés à la performance cible du canal de liaison descendante comporte au moins l'un des éléments suivants :

un taux d'erreur cible du canal de liaison descendante,
une plage de couverture du réseau de communication,
une puissance de transmission du dispositif de réseau (110),
une puissance de transmission du dispositif terminal (120), et
un modèle de trafic du réseau de communication.

4. Procédé selon la revendication 1, dans lequel la détermination du MCS sur la base de la première qualité de canal comprend :
la détermination du MCS sur la base de la première qualité de canal et d'une relation entre les MCS et les qualités de canal.

5. Procédé selon la revendication 1, dans lequel la mise à jour du niveau de répétition comprend :
en réponse au fait que la première qualité de canal dépasse la deuxième qualité de canal, le maintien du niveau de répétition inchangé ou la diminution du niveau de répétition.

6. Procédé selon la revendication 1, dans lequel la mise à jour du niveau de répétition comprend :
en réponse au fait que la première qualité de canal est inférieure à la deuxième qualité de canal, l'augmentation du niveau de répétition de sorte qu'un gain de répétition du niveau de répétition augmenté soit supérieur à une différence entre la première qualité de canal et la deuxième qualité de canal.

7. Procédé selon la revendication 1, comprenant en outre :
la transmission du niveau de répétition mis à jour pour le canal de liaison descendante au dispositif terminal (120).

8. Procédé selon la revendication 1, dans lequel la première qualité de canal et la deuxième qualité de canal sont au moins l'un des rapports suivants :

un rapport signal sur interférence plus bruit, SINR, et

un rapport signal sur bruit, SNR.

9. Procédé selon la revendication 1, dans lequel le réseau de communication est un réseau de communication de type machine, MTC, et le canal de liaison descendante est un canal physique de liaison descendante partagé, MPDSCH, de MTC.

10. Dispositif de réseau (500), comprenant :

un processeur (510) ; et
une mémoire (520) couplée au processeur et stockant des instructions sur celui-ci, les instructions, lorsqu'elles sont exécutées par le processeur, amenant le dispositif de communication à effectuer des actions, les actions comprenant :

la détermination d'une première qualité de canal d'un canal de liaison descendante entre le dispositif de réseau (500) et un dispositif terminal (120), sur la base d'une transmission de liaison montante du dispositif terminal (120) au dispositif de réseau (500) ;
la détermination d'une deuxième qualité de canal du canal de liaison descendante sur la base d'un ensemble de paramètres associés à une performance cible du canal de liaison descendante ; et
la mise à jour d'un niveau de répétition pour le canal de liaison descendante sur la base de la première qualité de canal et de la deuxième qualité de canal, le niveau de répétition indiquant un nombre de transmissions de répétition dans le canal de liaison descendante,
dans lequel le canal de liaison descendante est un canal de données de liaison descendante, et
dans lequel la détermination de la deuxième qualité de canal du canal de liaison descendante comprend :

la détermination d'un schéma de modulation et de codage, MCS, sur la base de la première qualité de canal ; et
la détermination d'une deuxième qualité de canal sur la base de l'ensemble de paramètres associés à la performance cible du canal de liaison descendante sous le MCS déterminé.

11. Dispositif de réseau (500) selon la revendication 10,
dans lequel la détermination de la première qualité de canal comprend la détermination de la première qualité de canal sur la base d'au moins l'un des éléments suivants :

un CQI provenant d'un canal de liaison montante entre le dispositif de réseau (500) et le dispositif terminal (120),
des statistiques d'accusé de réception, ACK, et d'accusé de réception négatif, NACK, du canal de liaison montante, et
une valeur d'indicateur de format de contrôle, CFI, pour un canal de contrôle de liaison descendante.

12. Dispositif de réseau (500) selon la revendication 10, dans lequel l'ensemble de paramètres associés à la performance cible du canal de liaison descendante comporte au moins l'un des éléments suivants :

un taux d'erreur cible du canal de liaison descendante,
une plage de couverture du réseau de communication,
une puissance de transmission du dispositif de réseau (500),
une puissance de transmission du dispositif terminal (120), et
un modèle de trafic du réseau de communication.

13. Dispositif de réseau (500) selon la revendication 10, dans lequel la détermination du MCS sur la base de la première qualité de canal comprend :
la détermination du MCS sur la base de la première qualité de canal et d'une relation entre les MCS et les qualités de canal.

14. Dispositif de réseau (500) selon la revendication 10, dans lequel la mise à jour du niveau de répétition comprend :
en réponse au fait que la première qualité de canal dépasse la deuxième qualité de canal, le maintien du niveau de répétition inchangé ou la diminution du niveau de répétition.

15. Dispositif de réseau (500) selon la revendication 10, dans lequel la mise à jour du niveau de répétition comprend :
en réponse au fait que la première qualité de canal est inférieure à la deuxième qualité de canal, l'augmentation du niveau de répétition de sorte qu'un gain de répétition du niveau de répétition augmenté soit supérieur à une différence entre la première qualité de canal et la deuxième qualité de canal.

16. Dispositif de réseau (500) selon la revendication 10, dans lequel les actions comprennent en outre :
la transmission du niveau de répétition mis à jour pour le canal de liaison descendante au dispositif terminal (120).

17. Dispositif de réseau (500) selon la revendication 10, dans lequel la première qualité de canal et la deuxième qualité de canal sont au moins l'un des rapports suivants :

un rapport signal sur interférence plus bruit, SINR, et
un rapport signal sur bruit, SNR.

18. Dispositif de réseau (500) selon la revendication 10, dans lequel le réseau de communication est un réseau de communication de type machine, MTC, et le canal de liaison descendante est un canal physique de liaison descendante partagé, MPDSCH, de MTC.

19. Support lisible par ordinateur sur lequel sont stockées des instructions, les instructions, lorsqu'elles sont exécutées sur au moins un processeur d'un dispositif de réseau, amenant l'au moins un processeur à réaliser le procédé selon l'une des revendications 1 à 9.

100 ↘

110 ⊸

120

Fig. 1

200 ↘

110

**NETWORK DEVICE**

120

**TERMINAL DEVICE**

210

220

230

240

250

Fig. 2

300

DETERMINE A FIRST CHANNEL QUALITY OF A DOWNLINK CHANNEL BETWEEN THE NETWORK DEVICE AND A TERMINAL DEVICE, BASED AT LEAST IN PART ON UPLINK TRANSMISSION FROM THE TERMINAL DEVICE TO THE NETWORK DEVICE — 310

DETERMINE A SECOND CHANNEL QUALITY OF THE DOWNLINK CHANNEL, BASED ON A SET OF PARAMETERS ASSOCIATED WITH A TARGET PERFORMANCE OF THE DOWNLINK CHANNEL — 320

UPDATE A REPETITION LEVEL FOR THE DOWNLINK CHANNEL BASED ON THE FIRST CHANNEL QUALITY AND THE SECOND CHANNEL QUALITY — 330

Fig. 3

400

FIRST DETERMINING UNIT — 410

SECOND DETERMINING UNIT — 420

UPDATING UNIT — 430

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2017265229 A1